# EUROPEAN PATENT APPLICATION

(11) **EP 2 998 854 A1**
(43) Date of publication of application: **23.03.2016**
(21) Application number: 15185499.9
(22) Date of filing: 16.09.2015
(51) Int. Cl.: G06F 3/0488, G06F 1/32, G06F 21/36

(54) **ELECTRONIC DEVICE HAVING INDEPENDENT SCREEN CONFIGURATIONS**

(30) Priority: 16.09.2014 KR 20140122953
(71) Applicant: Samsung Electronics Co., Ltd., Gyeonggi-do 16677 (KR)
(72) Inventor: LEE, Suk Jae, 06544 Seoul (KR); JUNG, Yong Chae, 01097 Seoul (KR); KIM, Kyoung Taek, 13623 Seongnam-si (KR); KIM, Ha Young, 06249 Seoul (KR); KIM, Han Gyul, 06785 Seoul (KR)
(74) Representative: Nederlandsch Octrooibureau

(57) **Abstract**

An electronic device which drives applications is provided. The electronic device includes a display partitioned into a first area and a second area, a memory configured to store the applications classified into a first group and a second group, and a processor configured to output a screen, associated with an execution of the first group, through the first area and output a screen, associated with an execution of the second group, through the second area.

## Description

### PRIORITY

This application claims priority to Korean Patent Application No. 10-2014-0122953, filed September 16, 2014.

### BACKGROUND OF THE INVENTION

### 1. Field of the Invention

The present disclosure relates to an electronic device for outputting an execution screen of an application through a display. More particularly, the present disclousre relates to an electronic device capable of partitioning a physical display into a plurality of areas and driving the plurality of areas independently of each other.

### 2. Background of the Invention

An electronic device (e.g., a smart phone, a table personal computer (PC), and the like) drives various applications to allow a user to perform a desired function. With the advancement of hardware (e.g., a processor) and software (e.g., an operating system (OS)), an electronic device is being developed which performs more functions at the same time. The electronic device simultaneously provides the user with a variety of information using a multi-window, a multi-tasking, and the like.

In an electronic device of the related art, such as a smart phone, one application occupies the whole screen or most of the screen, thereby making is difficult to use a multi-window or multi-tasking function. Furthermore, even though a function, such as multi-tasking, and the like, is used in a split screen manner, correlation between split screens is high, thereby making it impossible to use respective applications easily.

Therefore, a need exists for an electronic device capable of partitioning a physical display into a plurality of areas and driving the plurality of areas independently of each other.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below. Accordingly, an aspect of the present disclosure is to provide an electronic device capable of partitioning a physical display into a plurality of areas and driving the plurality of areas independently of each other.

In accordance with an aspect of the present disclosure, an electronic device which drives applications is provided. The electronic device includes a display partitioned into a first area and a second area, a memory configured to store the applications classified into a first group and a second group, and a processor configured to output a screen, associated with an execution of the first group, through the first area and output a screen, associated with an execution of the second group, through the second area.

In accordance with another aspect of the present disclosure, a method for executing an application, performed on an electronic device including a display is provided. The method includes storing applications which are executable on the electronic device and are classified into a first group and a second group, outputting, when an application included in the first group is executed, an execution result of the application included in the first group through a first area of the display, and outputting, when an application included in the second group is executed, an execution result of the application included in the second group through a second area distinct from the first area.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating an electronic device in a network environment according to various embodiments of the present disclosure;
FIG. 2 is a perspective view of an electronic device according to various embodiments of the present disclosure;
FIG. 3 is a flowchart schematically illustrating an application driving procedure of an electronic device according to various embodiments of the present disclosure;
FIG. 4 is a diagram schematically illustrating a screen in which each area of the screen is released from a sleep state according to various embodiments of the present disclosure;
FIG. 5 is a diagram schematically illustrating a screen in which each area of the screen is unlocked at a sleep state according to various embodiments of the present disclosure;
FIG. 6 is a diagram schematically illustrating an operating screen of a second area according to various embodiments of the present disclosure;
FIG. 7 is a diagram schematically illustrating a screen of an application executed on each area of the screen according to various embodiments of the present disclosure;
FIG. 8 is a diagram schematically illustrating a screen in which a second area of the screen enters a screensaver state according to various embodiments of the present disclosure;
FIG. 9 is a diagram schematically illustrating a screen in which a popup notification is displayed at each area of the screen according to various embodiments of the present disclosure;
FIG. 10 is a diagram schematically illustrating a screen in which an additional function is performed through a connection between a first area and a second area according to various embodiments of the present disclosure;
FIG. 11 is a diagram schematically illustrating a screen in which an additional function is performed through a connection between a first area and a second area according to various embodiments of the present disclosure;
FIG. 12 is a diagram schematically illustrating a screen in which a first area and a second area are connected to each other according to various embodiments of the present disclosure; and
FIG. 13 is a diagram schematically illustrating a screen in which an app is driven at a second area according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modification of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the disclosure disclosed herein, the expressions "have", "may have", "include" and "comprise", or "may include" and "may comprise" used herein indicate existence of corresponding features (e.g., elements, such as numeric values, functions, operations, components, and the like) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. The expressions may be used for distinguish one component from another component. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., the first element) is referred to as being "directly coupled with/to" or "directly connected to" another element (e.g., the second element), it should be understood that there are no intervening element (e.g., the third element).

According to the situation, the expression "configured to" used herein may be used as, for example, the expression "suitable for", "having the capacity to", "designed to", "adapted to", "made to", or "capable of". The term "configured to" must not mean only "specifically designed to" in hardware. Instead, the expression "a device configured to" may indicate that the device is "capable of" operating together with another device or other components. For example, a "processor configured to perform A, B, and C" may indicate a dedicated processor (e.g., an embedded processor) for performing a corresponding operation or a generic-purpose processor (e.g., a central processing unit (CPU) or an application processor (AP)) which may perform corresponding operations by executing one or more software programs which are stored in a memory device.

It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), a moving picture experts group phase 1 or phase 2 (MPEG-1 or MPEG-2) audio layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

According to various embodiments of the present disclosure, the electronic devices may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSync^{™}, Apple TV^{™}, or Google TV^{™}), game consoles (e.g., Xbox^{™} and PlayStation^{™}), electronic dictionaries, electronic keys, camcorders, electronic picture frames, and the like.

According to various embodiments of the present disclosure, the electronic devices may include at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices) receiving a user input in an idle mode, navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to a certain embodiment of the present disclosure, the electronic devices may include at least one of furniture or buildings/structures, electronic boards, electronic signature receiving devices, projectors, or various measuring instruments (e.g., water meters, electricity meters, gas meters, or wave meters, and the like). The electronic devices according to an embodiment of the present disclosure may be one or more combinations of the above-mentioned devices. According to a certain embodiment of the present disclosure, an electronic device may be a flexible electronic. In addition, electronic devices according to various embodiments of the present disclosure are not limited to the above-mentioned devices, and may include new electronic devices according to technology development

Hereinafter, electronic devices according to an embodiment of the present disclosure will be described with reference to the accompanying drawings. The term "user" used herein may refer to a person who uses an electronic device or may refer to a device (e.g., an artificial electronic device) that uses an electronic device.

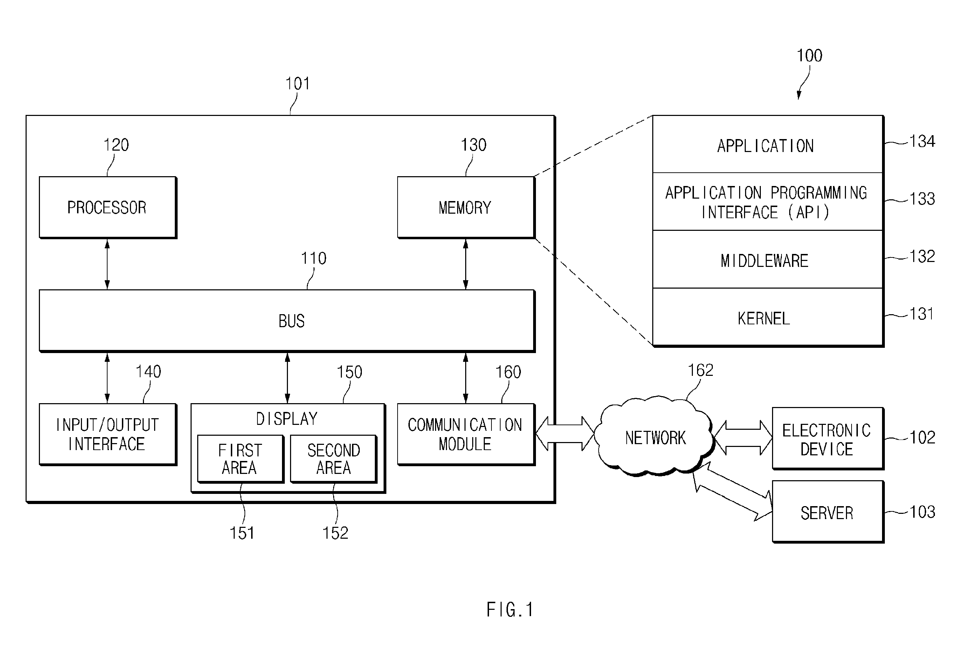

FIG. 1 is a diagram illustrating an electronic device in a network environment according to various embodiments of the present disclosure.

Referring to FIG. 1, there is illustrated an electronic device 101 in a network environment 100 according to various embodiments of the present disclosure. The electronic device 101 may include a bus 110, a processor 120, a memory 130, an input/output (I/O) interface 140, a display 150, and a communication interface 160. According to an embodiment of the present disclosure, the electronic device 101 may not include at least one of the above-described components or may further include other component(s). According to various embodiments of the present disclosure, the electronic device 101 may include the physical display 150 which is partitioned into a first area 151 and a second area 152 and may allow applications to be driven independently on the first area 151 and the second area 152. A user may use a multi-tasking or multi-window function of an intuitive simple form through the first area 151 and the second area 152.

The bus 110 may interconnect the above-described components 110 to 160 and may be a circuit for conveying communications (e.g., a control message and/or data) among the above-described components.

The processor 120 may include one or more of a CPU, an AP, or a communication processor (CP). The processor 120 may perform, for example, data processing or an operation associated with control or communication of at least one other component(s) of the electronic device 101.

According to various embodiments of the present disclosure, the processor 120 may drive applications on the first area 151 and the second area 152 independently of each other. Furthermore, the processor 120 may allow each of the first area 151 and the second area 152 to independently enter a sleep state or a locking state or to be released from the sleep state or the locking state.

The memory 130 may include a volatile and/or nonvolatile memory. The memory 130 may store instructions or data associated with at least one other component(s) of the electronic device 101. According to various embodiments of the present disclosure, the memory 130 may store software and/or a program. At least a portion of a kernel 131, a middleware 132, or an application programming interface (API) 133 may be called an "operating system (OS)".

The kernel 131 may control or manage system resources (e.g., the bus 110, the processor 120, the memory 130, and the like) that are used to execute operations or functions of other programs (e.g., the middleware 132, the API 133, and an application 134). Furthermore, the kernel 131 may provide an interface that allows the middleware 132, the API 133, or the application 134 to access discrete components of the electronic device 101 so as to control or manage system resources.

The middleware 132 may perform a mediation role such that the API 133 or the application 134 communicates with the kernel 131 to exchange data. Furthermore, the middleware 132 may process task requests received from the application 134 according to a priority. For example, the middleware 132 may assign the priority which makes it possible to use a system resource (e.g., the bus 110, the processor 120, the memory 130, and the like) of the electronic device 101 and may perform control (e.g., scheduling or load balancing) on a task request.

The API 133 may be an interface through which the application 134 controls a function provided by the kernel 131 or the middleware 132, and may include, for example, at least one interface or function (e.g., an instruction) for a file control, a window control, image processing, a character control, and the like.

The application 134 may be a program performing a plurality of functions which are executed on the electronic device 101. The application 134 may be driven according to an internal or external signal of the electronic device 101 to perform a specific function. For example, the application 134 may include a short messaging service (SMS)/multimedia messaging service (MMS) application, an e-mail application, a calendar application, an alarm application, a health care application (e.g., an application for measuring an exercise amount, a blood sugar, and the like), an environment information application (e.g., an application for providing air pressure, humidity, and temperature information), and the like.

According to various embodiments of the present disclosure, the application 134 may be partitioned into a first group and a second group and may be stored at the memory 130. A screen which is associated with execution of the first group may be output through the first area 151, and a screen which is associated with execution of the second group may be output through the second area 152.

The I/O interface 140 may transmit an instruction or data, input from a user or another external device, to other component(s) of the electronic device 101. Furthermore, the I/O interface 140 may output an instruction or data, received from other component(s) of the electronic device 101, to a user or another external device.

The display 150 may include, for example, a liquid crystal display (LCD), a light-emitting diode (LED) display, an organic LED (OLED) display, or a microelectromechanical systems (MEMS) display, or an electronic paper display. The display 150 may display, for example, various contents (e.g., a text, an image, a video, an icon, a symbol, and the like) to a user. The display 150 may include a touch screen and may receive, for example, a touch, gesture, proximity, or hovering input using an electronic pen or a portion of a user's body.

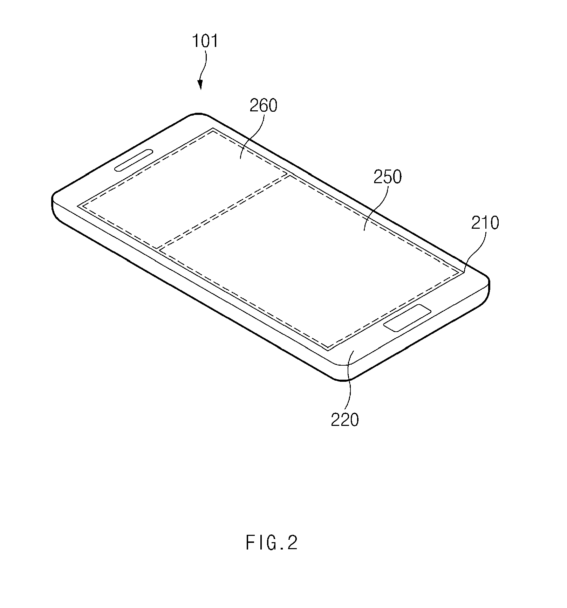

According to various embodiments of the present disclosure, the display 150 may be partitioned into the first area 151 and the second area 152. The first area 151 and the second area 152 may be independent of each other in operation and may output execution screens of different applications, respectively. The first area 151 and the second area 152 may be independently released from a sleep state or a locking state. A user may release a sleep state or a locking state of a desired area and may execute different applications on the desired area. Information associated with operations of the first area 151 and the second area 152 may be given with respect to FIGS. 2 to 13.

Referring to FIG. 1, an embodiment of the inventive concept is exemplified as the display 150 is partitioned into the first area 151 and the second area 152. However, the scope of the present disclosure may not be limited thereto. According to various embodiments of the present disclosure, the display 150 may be partitioned into three or more areas.

The communication interface 160 may establish communication between the electronic device 101 and an external device (e.g., an electronic device 102 or a server 103). For example, the communication interface 160 may be connected to a network 162 through wireless communication or wired communication to communicate with the external device (e.g., the electronic device 102 or the server 103).

The wireless communication may include at least one of, for example, long term evolution (LTE), LTE-advanced (LTE-A), code division multiple access (CDMA), wideband CDMA (WCDMA), universal mobile telecommunications service (UMTs), wireless broadband (WiBro), global system for mobile communications (GSM), and the like, as cellular communication protocol. The wired communication may include at least one of, for example, a universal serial bus (USB), a high definition multimedia interface (HDMI), a recommended standard-132 (RS-132), or a plain old telephone service (POTS). The network 162 may include at least one of telecommunications networks, for example, a computer network (e.g., a local area network (LAN) or a wide area network (WAN)), an internet, or a telephone network.

The external electronic device 102 may be a device of which the type is different from or the same as that of the electronic device 101. According to an embodiment of the present disclosure, the server 103 may include a group of one or more servers. According to various embodiments of the present disclosure, all or a part of operations that the electronic device 101 will perform may be executed by another or plural electronic devices (e.g., the external electronic device 102 and the server 103). According to an embodiment of the present disclosure, in the case where the electronic device 101 executes any function or service automatically or in response to a request, the electronic device 101 may not perform the function or the service internally, but, alternatively additionally, it may request at least a portion of a function associated with the electronic device 101 at the other device (e.g., the external electronic device 102 or the server 103). The other electronic device (e.g., the external electronic device 102 or the server 103) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

FIG. 2 is a perspective view of an electronic device according to various embodiments of the present disclosure.

Referring to FIG. 2, the electronic device 101 may include a display 210 and a body portion 220. The display 210 (e.g., the display 150 in FIG. 1) may output an image or a text so as to be provided to a user. The body portion 220 may include a module or a circuit for driving the display 210.

According to various embodiments of the present disclosure, the display 210 may be partitioned into a first area 250 and a second area 260. The display 210 may be seen like a screen in appearance at a sleep state (or a screen-off state, a power-off state, and the like). However, if the sleep state is released, the display 210 may be divided into the first area 250 and the second area 260 which are driven independently of each other. The display 210 may not include a separate bezel, and the like, for distinguishing the first area 250 and the second area 260. The processor 120 may operate the first area 250 and the second area 260 independently of each other and may allow different applications to be executed on the first area 250 and the second area 260, respectively. According to various embodiments of the present disclosure, locations and sizes of the first area 250 and the second area 260 may be previously determined and fixed in manufacturing the electronic device 101.

According to various embodiments of the present disclosure, the second area 260 may be located at the top of the first area 250, and the size of the second area 260 may be smaller than that of the first area 250. The second area 260 may be used to output an application which provides a user with simple information.

According to various embodiments of the present disclosure, the processor 120 may drive the first area 250 and the second area 260 independently. The processor 120 may classify applications, which are capable of being installed and executed on the electronic device 101, into a first group and a second group. The processor 120 may output a screen associated with execution of an application in the first group through the first area 250 and may output a screen associated with execution of an application in the second group through the second area 260.

According to various embodiments of the present disclosure, an electronic device which drives applications may include a display partitioned into a first area and a second area, a memory configured to store the applications classified into a first group and a second group, and a processor configured to output a screen, associated with an execution of the first group, through the first area and output a screen, associated with an execution of the second group, through the second area.

According to various embodiments of the present disclosure, sizes of the first and second areas may be fixed, and the second area may be disposed at a top or bottom of the first area and may be smaller in area than the first area.

According to various embodiments of the present disclosure, the first and second areas may receive specific inputs at a sleep state, respectively, and may be activated independently of each other. The first and second areas may receive unlocking inputs at a locking state, respectively, and may be unlocked independently of each other.

According to various embodiments of the present disclosure, the first and second areas may enter a screensaver state at a screen-off state independently of each other. The first and second areas may enter a sleep state at a screen-off state independently of each other.

According to various embodiments of the present disclosure, the second group may include at least one of a message app, a schedule app, a health care app, a voice recognition app, a camera app, or a video reproduction app.

According to various embodiments of the present disclosure, the processor may call an application belonging to the first group based on an execution result of an application belonging to the second group. The called application may output additional information associated with the execution result through the first area. The called application may perform a specific function based on the execution result and outputs a result of performing the specific function through the first area.

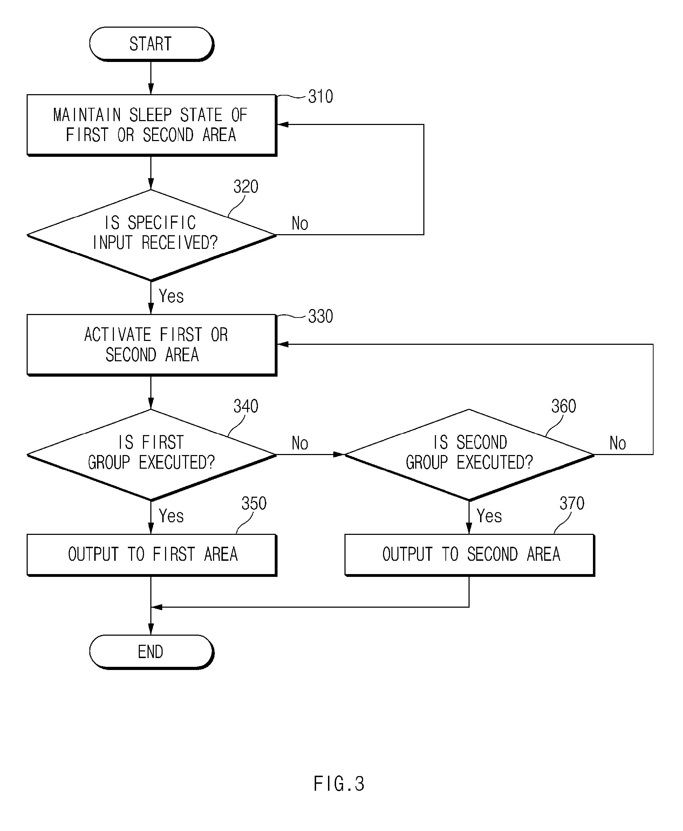

FIG. 3 is a flowchart schematically illustrating an application driving procedure of an electronic device according to various embodiments of the present disclosure.

Referring to FIG. 3, in operation 310, the first area 250 and the second area 260 may maintain a sleep state, respectively. The sleep state may include a screen-off state, a process deep sleep state (a state in which a process is activated by a specific signal, with standby power minimized), and the like. The display 210 may be partitioned into the first area 250 and the second area 260. However, in the case where all the first area 250 and the second area 260 remain at the sleep state, the display 210 may be seen like one screen in appearance.

In operation 320, the processor 120 may determine whether there is received a specific input for releasing the sleep state of the first area 250 or the second area 260. The specific input may include button inputs (e.g., inputs about a power button, a home button, a volume button, and the like) or inputs (e.g., a voice input, a motion input, and the like) through various sensors included in the electronic device 101. According to various embodiments of the present disclosure, the specific input may be a signal indicating occurrence of events, such as reception of a call or message about the electronic device 101, notification according to an operation of an application, alarm notification, schedule notification, and the like. The processor 120 may maintain a current sleep state if the specific input is not received.

If the specific input is received, in operation 330, the processor 120 may activate the first area 250 or the second area 260. One of the first area 250 and the second area 260 may remain at the sleep state, and the other thereof may remain at an active state. Alternatively, both the first area 250 and the second area 260 may remain at an active state.

According to various embodiments of the present disclosure, the processor 120 may independently activate the first area 250 or the second area 260 based on a kind of the input. For example, the processor 120 may activate the first area 250 if a user pushes one button (e.g., the bottom of a volume button) associated with the first area 250 and may activate the second area 260 if the user pushes another button (e.g., the top of the volume button) associated with the second area 260. An activated area may be independently driven, even though a touch input is generated at one area, the touch input may not affect the other area. The user may activate a desired area and may allow the other area to remain at the sleep state, thereby improving power efficiency.

In operation 340, the processor 120 may determine whether an application (hereinafter referred to as "first group") belonging to a first group executable on the first area 250 is executed. If the first group is executed, in operation 350, the processor 120 may output a screen according to execution of an application to the first area 250. In this case, the second area 260 may remain at the sleep state or at a state in which a separate application is executed. The second area 260 may operate independently regardless of execution of the first group.

In operation 360, the processor 120 may determine whether an application (hereinafter referred to as "second group") belonging to a second group executable on the second area 260 is executed. If the second group is executed, in operation 370, the processor 120 may output a screen according to execution of an application to the second area 260.

The first area 250 or the second area 260 may be independently released from the sleep state, and an application may be independently driven at the first area 250 or the second area 260. A user may utilize a multi-window or multi-tasking of an intuitive simple form through the first area 250 or the second area 260.

According to various embodiments of the present disclosure, a method for executing an application may be performed on an electronic device including a display and may include storing applications which are executable on the electronic device and are classified into a first group and a second group, when an application included in the first group is executed, outputting an execution result of the application included in the first group through a first area of the display, and when an application included in the second group is executed, outputting an execution result of the application included in the second group through a second area distinct from the first area.

According to various embodiments of the present disclosure, the application executing method may further include allowing the first and second areas to enter a screensaver state from a screen-off state independently of each other. The application executing method may further include allowing the first and second areas to enter a sleep state from a screen-off state independently of each other.

According to various embodiments of the present disclosure, the application executing method may further include receiving specific inputs corresponding to the first and second areas at a sleep state and activating the first and second areas independently of each other. The application executing method may further include receiving specific inputs corresponding to the first and second areas at a sleep state and allowing the first and second areas to enter a locking state independently of each other. The application executing method may further include receiving specific inputs corresponding to the first and second areas at the locking state and allowing the first and second areas to enter an unlocking state independently of each other.

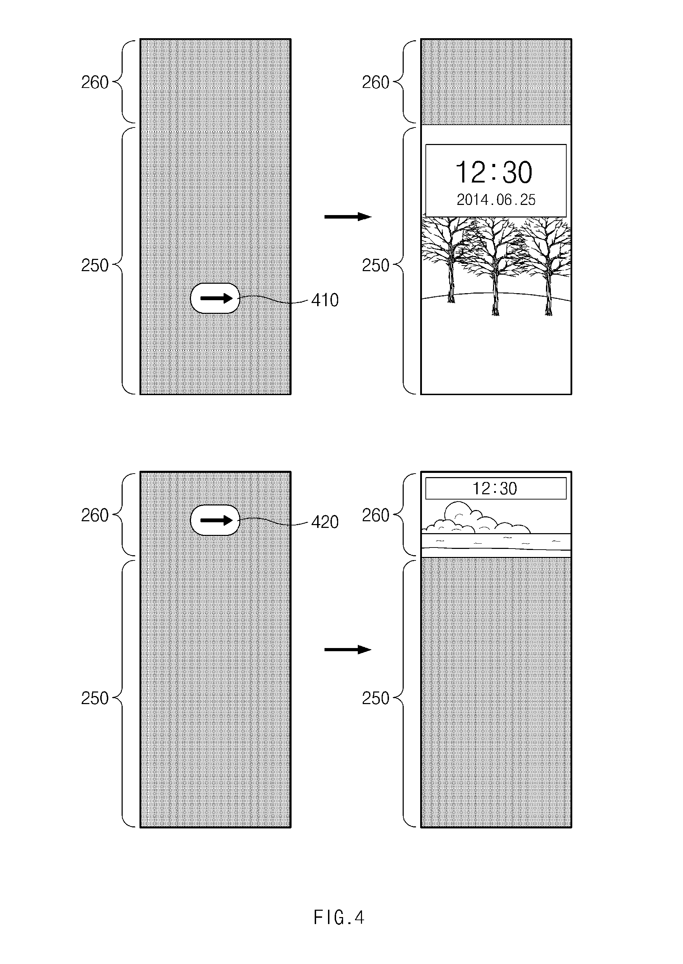

FIG. 4 is a diagram schematically illustrating a screen in which each area of the screen is released from a sleep state according to various embodiments of the present disclosure.

Referring to FIG. 4, the first area 250 and the second area 260 may remain at a sleep state. In the case where the first area 250 and the second area 260 all remain at the sleep state, the display 210 may be seen like one screen in appearance.

In the case of receiving a specific input for releasing a sleep state, the processor 120 may release sleep states of the first area 250 and the second area 260. The specific input may include button inputs (e.g., inputs about a power button, a home button, a volume button, and the like) or inputs (e.g., a voice input, a motion input, and the like) through various sensors included in the electronic device 101. Below, a description will be given with reference to the case that the input is a flick input. However, the scope of the present disclosure may not be limited thereto.

The first area 250 or the second area 260 may be released from the sleep state by a flick input 410 or a flick input 420. In the case where the flick input 410 is input at the first area 250, with the first area 250 and the second area 260 remaining at the sleep state, the processor 120 may activate the first area 250 and may maintain the sleep state of the second area 260. In the case of intending to execute the first group, a user may activate the first area 250 and may allow the second area 260 to remain at the sleep state, thereby improving power efficiency.

In the case where the flick input 420 is input at the second area 260, with all the first area 250 and the second area 260 remaining at the sleep state, the processor 120 may activate the second area 260 and may maintain the sleep state of the first area 250. In the case of intending to execute the second group, a user may activate the second area 260 and may allow the first area 250 to remain at the sleep state, thereby improving power efficiency. According to various embodiments of the present disclosure, the second area 260 may be implemented in a small area compared to the first area 250. In this case, the user may activate the second area 260 and may determine simple information, such as a time, a message, a stock price, and the like.

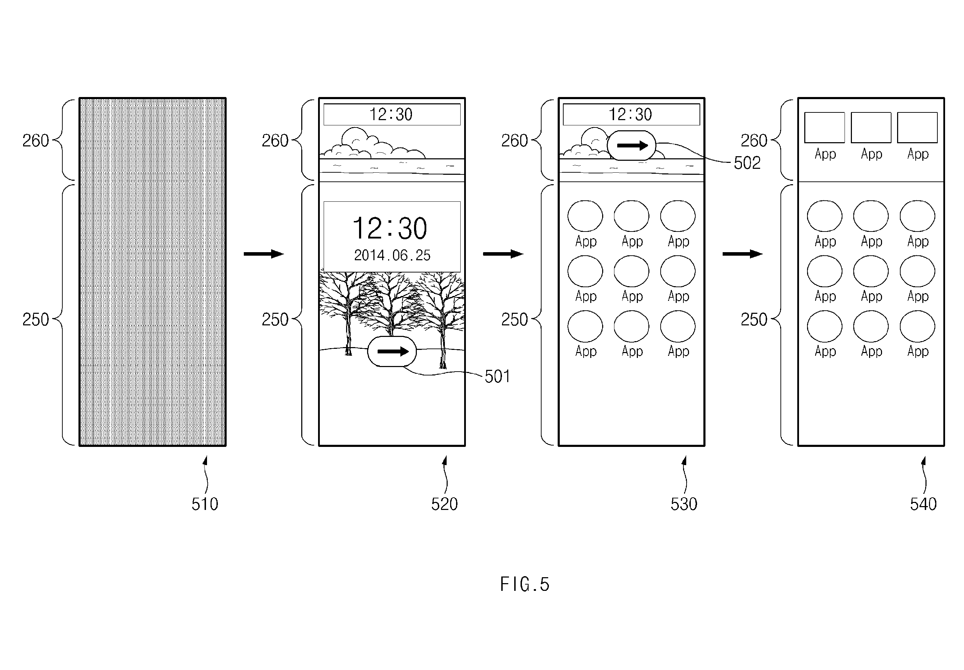

FIG. 5 is a diagram schematically illustrating a screen in which each area of the screen is unlocked at a sleep state according to various embodiments of the present disclosure.

Referring to FIG. 5, in screen 510, the first area 250 and the second area 260 may remain at a sleep state. In this case, the display 210 may be seen like one screen in appearance.

In screen 520, in the case of receiving a specific input for releasing sleep states of the first area 250 and the second area 260, the processor 120 may release the sleep states of the first area 250 and the second area 260. The specific input may include button inputs (e.g., inputs about a power button, a home button, a volume button, and the like) or inputs (e.g., a voice input, a motion input, and the like) through various sensors included in the electronic device 101.

According to various embodiments of the present disclosure, the sleep states of the first area 250 and the second area 260 may be simultaneously released according to the specific input. For example, in the case where a user pushes a home button, the sleep states of the first area 250 and the second area 260 may be simultaneously released. Even though the sleep states of the first area 250 and the second area 260 are simultaneously released, the first area 250 and the second area 260 may provide a locking screen and a background screen, separated from each other, respectively. An embodiment of the present disclosure is exemplified in screen 520 as the first area 250 and the second area 260 are simultaneously released from the sleep state and enter a locking state.

In screens 520 and 530, if an unlocking input (e.g., a flick input, a password input, a pattern input, and the like) 501 or 502 is received at the first area 250 or the second area 260, the processor 120 may release the locking state of a specific area.

In screen 520, if the unlocking input 501 is provided at the first area 250, the processor 120 may release a locking state of the first area 250 and may output a screen associated with execution of an application of the first group, such as a home screen, an application selection screen, and the like.

In screen 530, if the unlocking input 502 is provided at the second area 260, the processor 120 may release a locking state of the second area 260 and may output a screen associated with execution of an application of the second group, such as a home screen, an application selection screen, and the like.

In screen 540, in the case where the first area 250 and the second area 260 all are unlocked, the processor 120 may drive applications in different groups on the first area 250 and the second area 260. The processor 120 may output different widget screens (or a shortcut screen, a home screen, and the like) to the first area 250 and the second area 260, thereby making it possible for a user to utilize a multi-window function in the most simple and intuitive manner.

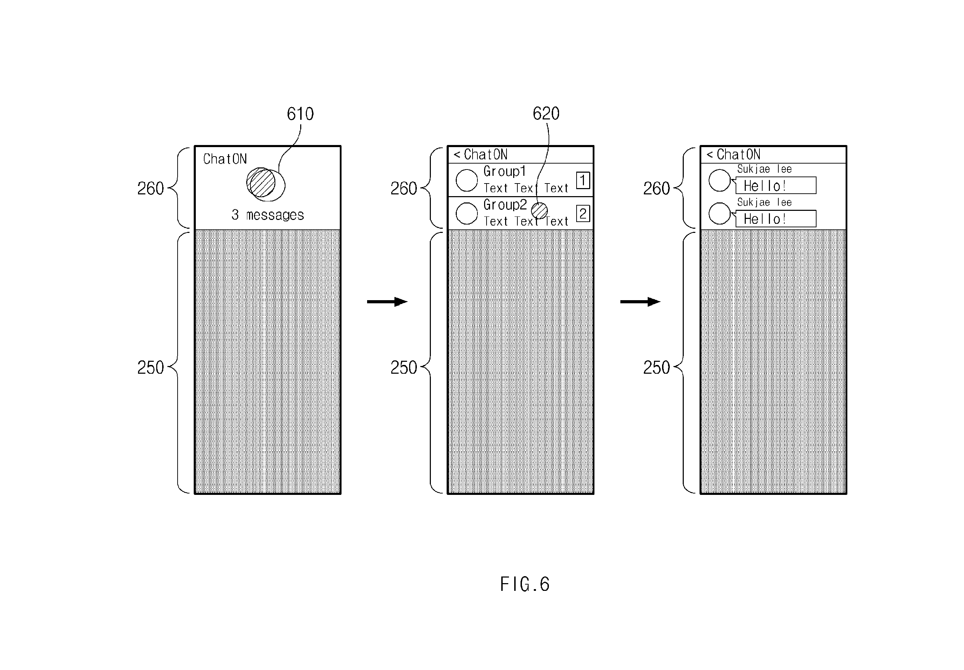

FIG. 6 is a diagram schematically illustrating an operating screen of a second area according to various embodiments of the present disclosure.

Referring to FIG. 6, the second area 260 may be at an active state, and the first area 250 may be at a sleep state. In the second area 260, even though an event, such as reception of a user touch input or reception of a message occurs, the first area 250 may not be affected by the event and may maintain the sleep state.

An application in the second group may be executed on the second area 260. For example, in the case where a messenger application (e.g., Chat ON) is included in the second group, a screen associated with the messenger application may be output through the second area 260 without affecting the first area 250. A popup or notification about reception of a message may be output at the second area 260, even though the notification occurs, the first area 250 may continuously maintain the sleep state.

In the case where a new message is received through an application in the second group, a user may determine a message list through a touch input 610. If the message list (e.g., a reception message box) is displayed, the user may select a message, which the user wants to determine, through a touch input 620. Even though the user manipulates the touch input 610 or 620 at the second area 260, the sleep state of the first area 250 may be maintained regardless of a touch input of the user. The electronic device 101 may allow the user to determine desired information through a part of the display 210, thereby improving power efficiency and making it possible to provide the user with an intuitive multi-tasking function.

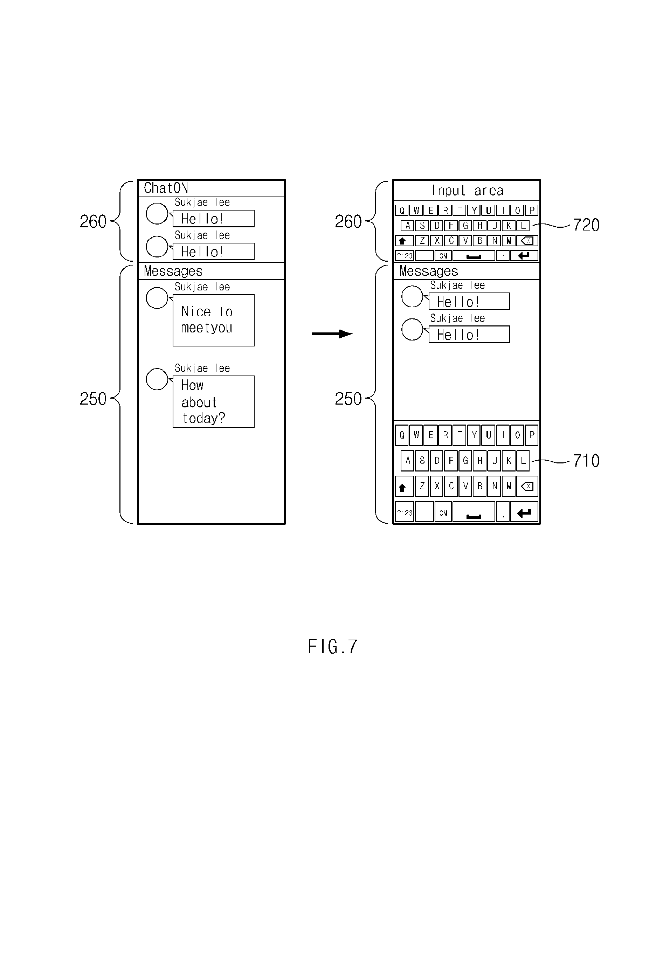

FIG. 7 is a diagram schematically illustrating a screen of an application executed on each area of the screen according to various embodiments of the present disclosure.

Referring to FIG. 7, the first area 250 may drive an application of the first group, and the second area 260 may execute an application of the second group. As illustrated in FIG. 7, for example, a messenger app (e.g., Chat ON) may be driven at the first area 250, and a text message app may be driven at the second area 260. The applications may be independently driven, and the first area 250 and the second area 260 may not affect each other.

According to various embodiments of the present disclosure, the first area 250 and the second area 260 may not affect each other even though the same kind of applications (e.g., a keyboard app) is simultaneously driven thereon. For example, in the case of a keyboard app illustrated in FIG. 7, a keyboard app 710 may be called if a user inputs a text at the first area 250. A keyboard app 720 may be called if the user intends to input a text at the second area 260. The keyboard apps 710 and 720 may be independent programs and may not affect each other in operation. Furthermore, a result input through each app may be applied independently at each area of the screen.

According to various embodiments of the present disclosure, even though the same kind of applications is simultaneously activated, the first area 250 and the second area 260 may operate with different settings. For example, the keyboard app 710 may be set to a Chonjiin method for a Hangul input, and the keyboard app 720 may be set to a qwertyy method for a Hangul input. The user may make a keyboard input at each of the first area 250 and the second area 260 and may efficiently use two applications at the same time.

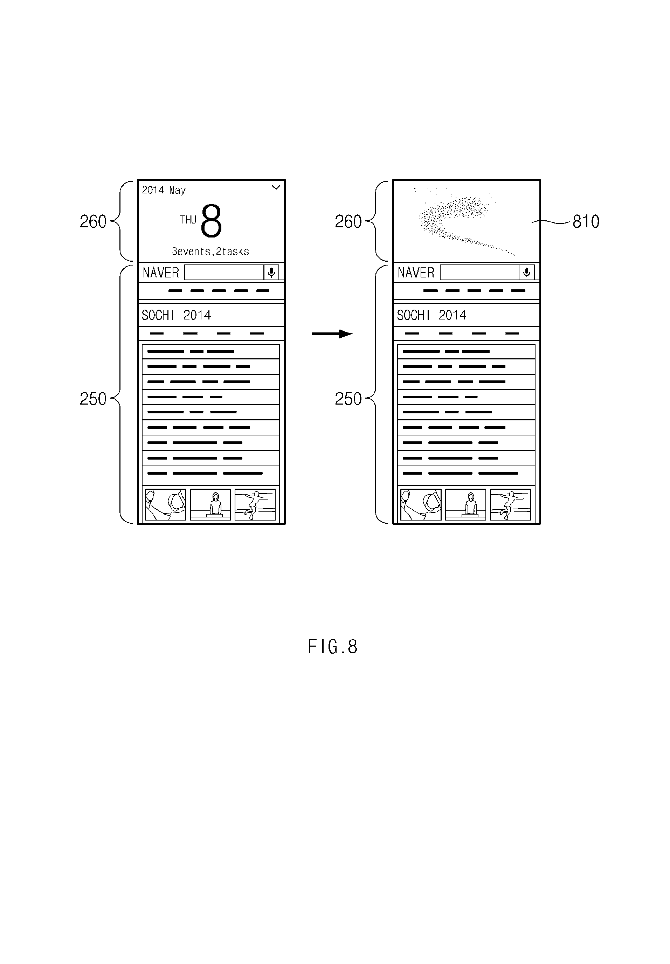

FIG. 8 is a diagram schematically illustrating a screen in which a second area of the screen enters a screensaver state according to various embodiments of the present disclosure.

Referring to FIG. 8, the first area 250 and the second area 260 may be driven independently of each other and may operate while driving applications in the first group and the second group, respectively. For example, as illustrated in FIG. 8, a web browser app may be driven at the first area 250, and a schedule app may be driven at the second area 260.

A user may drive different applications at the first area 250 and the second area 260 and may obtain desired information. The user may search a web page through the first area 250 and may determine a today's schedule through the second area 260.

According to various embodiments of the present disclosure, in the case where no user input is received during a specific time and an event, such as schedule notification is not generated, the first area 250 or the second area 260 may enter a screensaver state or a sleep state, independently. For example, in the case where through the first area 250, the user continues to search a web page and touches a screen, the first area 250 may not enter the screensaver state. In contrast, in the case where the user does not provide an input during a specific time with respect to the second area 260, the second area 260 may enter a screensaver state 810. Afterwards, in the case where a user input occurs at the second area 260, the screensaver state 810 of the second area 260 may be released.

The electronic device 101 may allow each area to enter a screensaver state or a sleep state independently, thereby improving power efficiency and making it possible to protect data.

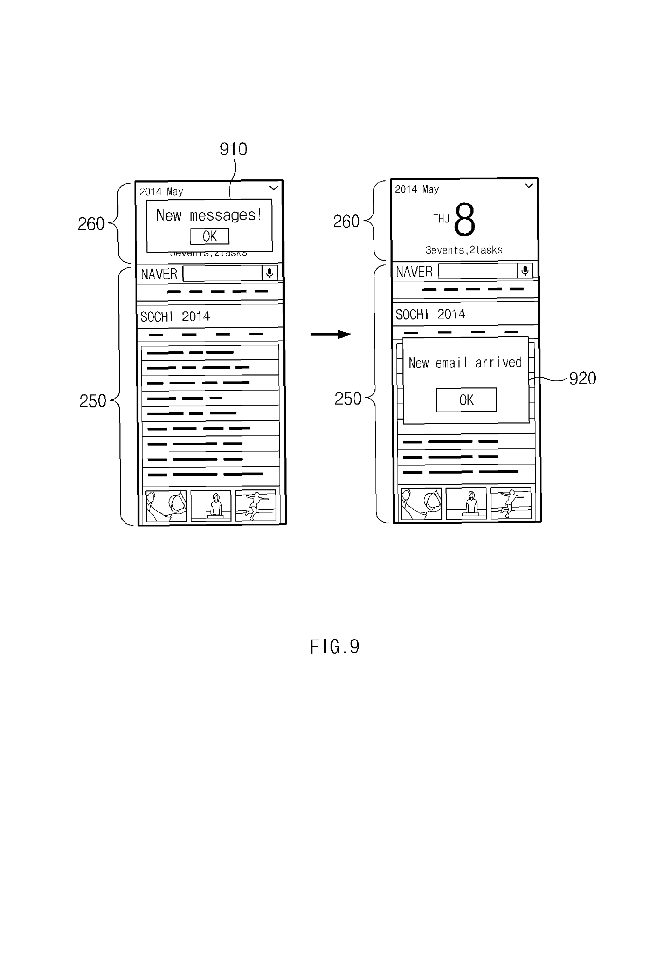

FIG. 9 is a diagram schematically illustrating a screen in which a popup notification is displayed at each area of the screen according to various embodiments of the present disclosure.

Referring to FIG. 9, the first area 250 and the second area 260 may be driven independently of each other, and an application in the first group and an application in the second group may be respectively driven at the first area 250 and the second area 260. As illustrated in FIG. 9, for example, a web browser app may be driven at the first area 250, and a schedule app may be driven at the second area 260. If an event, such as reception of a new message, reception of a new e-mail, and the like occurs at an app belonging to each group, the first area 250 and the second area 260 may inform a user of occurrence of the event through a popup window 920 and a popup window 910, respectively.

In the case where an e-mail app belongs to the first group, notification indicating that a new e-mail is arrived may be output at the first area 250 in the form of the popup window 920 and may not affect the second area 260. In contrast, in the case where a text message app belongs to the second group, notification indicating that a new message is arrived may be output at the second area 260 in the form of the popup window 910 and may not affect the first area 250.

According to various embodiments of the present disclosure, each popup screen may be set not to get out of an area corresponding thereto. For example, the e-mail reception popup 920 may be set not to get out of the first area 250 even though the user moves the popup 920. Similarly, a message reception popup 910 may be set not to get out of the second area 260 even though the user moves the popup 910.

Even though a user touches a popup window and executes a corresponding application, each application may be output within an area where a popup window is generated and may not affect another area.

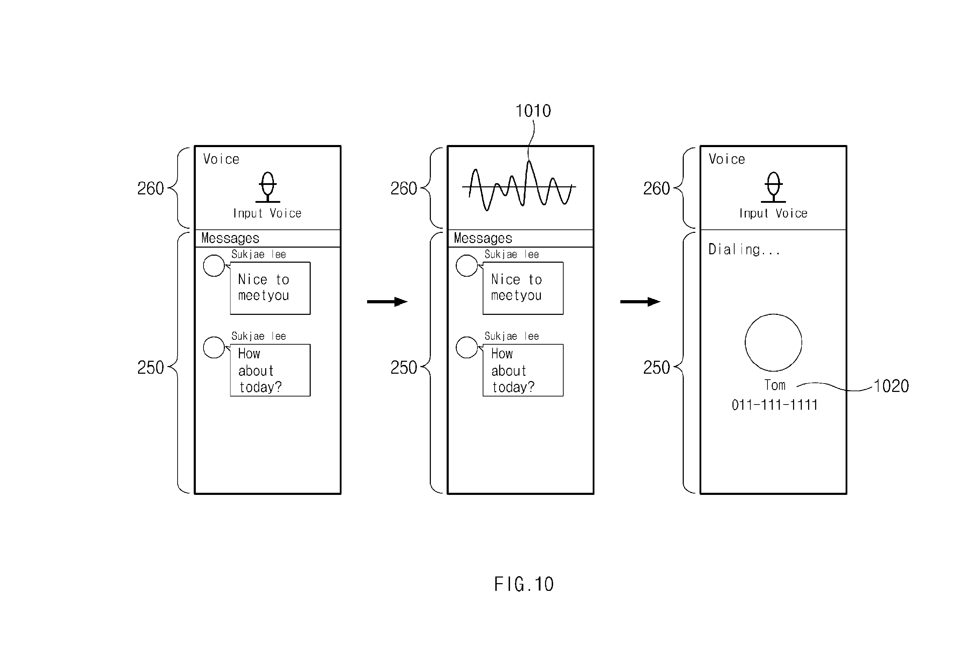

FIG. 10 is a diagram schematically illustrating a screen in which an additional function is performed through a connection between a first area and a second area according to various embodiments of the present disclosure.

Referring to FIG. 10, the first area 250 and the second area 260 may be driven independently of each other, but each of the first area 250 and the second area 260 may call an application included in a counter area to provide additional information or perform an additional function.

The first area 250 and the second area 260 may be driven independently of each other, and an application in the first group and an application in the second group may be respectively driven at the first area 250 and the second area 260. For example, as illustrated in FIG. 10, a message app may be driven at the first area 250, and a voice recognition app may be driven at the second area 260.

In the case where a user provides a voice input 1010 about a call recipient "Tom" through the voice recognition app of the second area 260, the processor 120 may call an address book app or a call connection app of the first area 250 based on the voice recognition result. The processor 120 may determine a phone number of the voice-recognized receiver of "Tom" from the address book app and may request call connection through the call connection app. The processor 120 may display outgoing information 1020 at the first area 250.

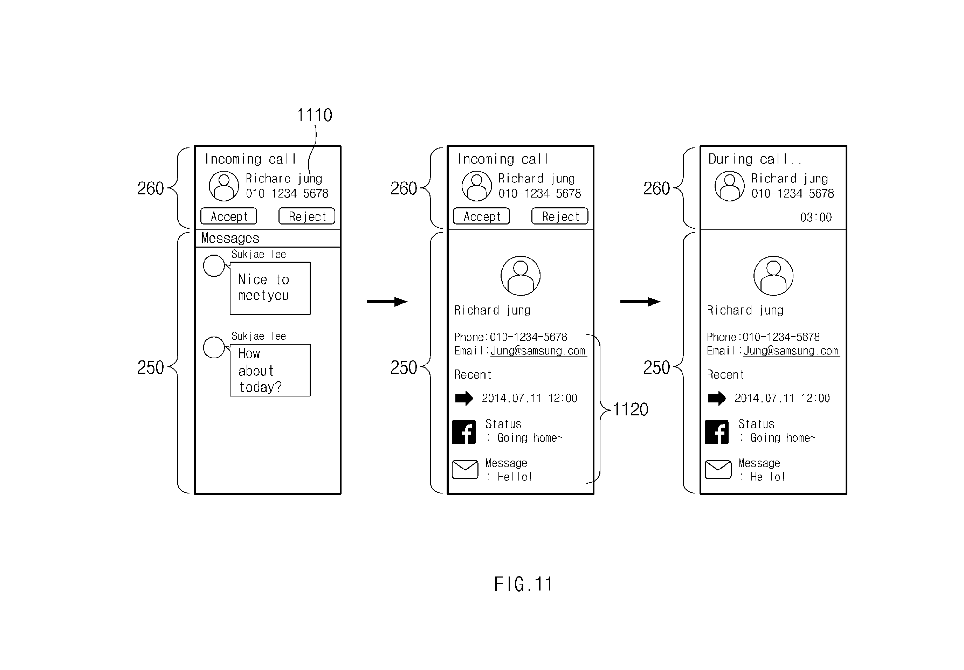

FIG. 11 is a diagram schematically illustrating a screen in which an additional function is performed through a connection between a first area and a second area according to various embodiments of the present disclosure.

Referring to FIG. 11, the first area 250 and the second area 260 may be driven independently of each other, but each of the first area 250 and the second area 260 may call an application included in a counter area to provide additional information or perform an additional function.

The first area 250 and the second area 260 may be driven independently of each other, and an application in the first group and an application in the second group may be respectively driven at the first area 250 and the second area 260. For example, as illustrated in FIG. 11, a message app, an address book app, and the like may be driven at the first area 250, and a call connection app may be driven at the second area 260.

In the case where a call is received from an external electronic device (e.g., the electronic device 102), the call connection app may be executed and may output reception of a call and outgoing call information 1110 at the second area 260.

The call connection app may call an address book app belonging to the first group, based on the outgoing call information 1110. The address book app belonging to the first group may output additional information 1120 (e.g., an address, e-mail information, SNS information, and the like), included in the address book app, at the first area 250, based on the outgoing call information 1110.

A user may determine the additional information 1120 and may answer or block a phone call. If the call is connected, connection time information, and the like, may be displayed through the second area 260.

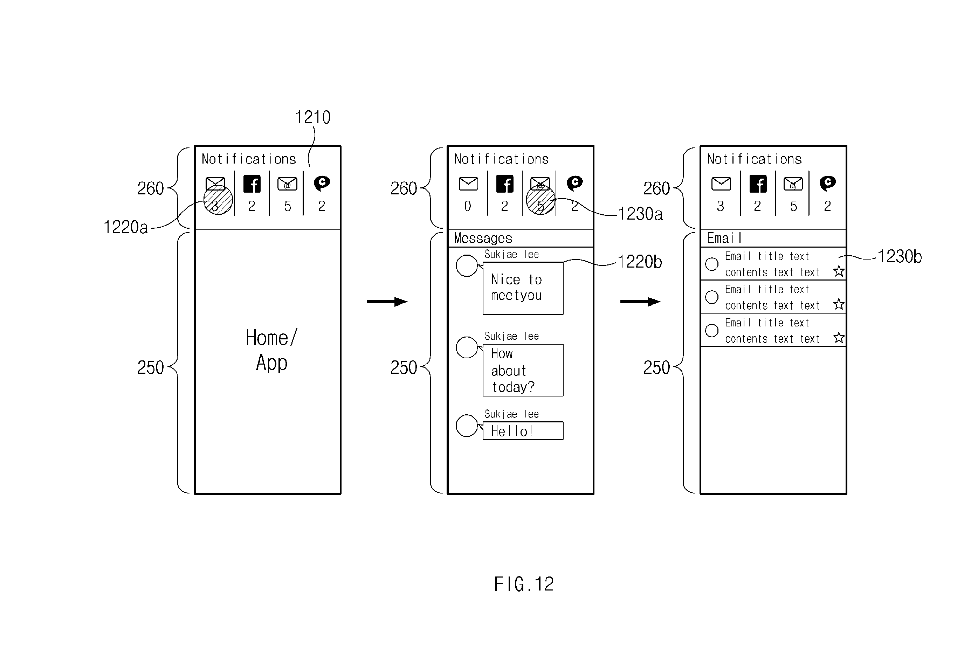

FIG. 12 is a diagram schematically illustrating a screen in which a first area and a second area are linked to each other according to various embodiments of the present disclosure.

Referring to FIG. 12, the first area 250 and the second area 260 may be driven independently of each other, but each of the first area 250 and the second area 260 may call an application included in a counter area to provide additional information or perform an additional function.

The first area 250 and the second area 260 may be driven independently of each other, and an application in the first group and an application in the second group may be respectively driven at the first area 250 and the second area 260. For example, as illustrated in FIG. 12, a message app, an e-mail app, and the like, may be driven at the first area 250, and a widget or gadget app 1210 for quick execution of an application may be driven at the second area 260.

In the case where a user determines reception of a new message at the second area 260 and touches a message icon 1220a for determining contents, the gadget app 1210 may call a message app belonging to the first group. The message app may be displayed through the first area 250. The message app may display a new message 1220b at the first area 250.

In the case where the user determines reception of a new e-mail at the second area 260 and touches an e-mail icon 1230a for determining contents, the gadget app 1210 may call an e-mail app belonging to the first group. The e-mail app may be displayed through the first area 250. The e-mail app may display a new e-mail 1230b at the first area 250.

The user may easily determine contents, changed at various applications through the gadget app 1210, and a desired application may be executed through the first area 250. Accordingly, it may be possible to use various applications intuitively and simply.

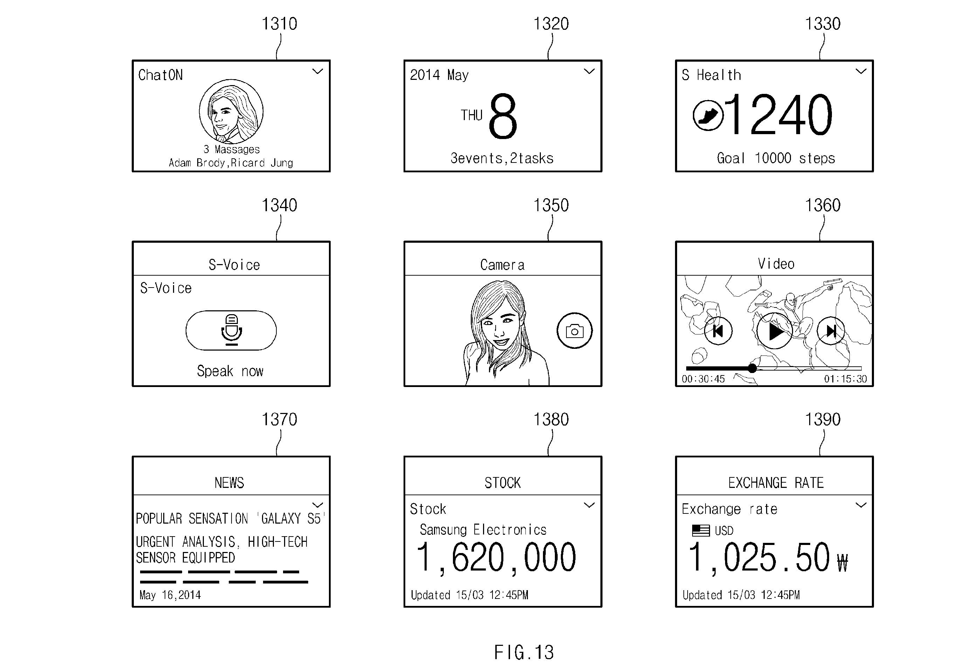

FIG. 13 is a diagram schematically illustrating a screen in which an app is driven at a second area according to various embodiments of the present disclosure.

Referring to FIG. 13, the size of the second area 260 may be smaller than that of the first area 250. The second area 260 may be used to output an application allowing a user to determine simple information or operating through a simple manipulation, and the first area 250 may be used to provide a lot of information using a relatively large screen. Classification of the first group and the second group may be determined at a manufacturing level of the electronic device 101, a service level, an application installation level, and the like.

According to various embodiments of the present disclosure, the second group may include a message app 1310, a schedule app 1320, a health care app 1330, a voice recognition app 1340, and the like. The second group may include an application(s) which allows a user to determine contents through a simple manipulation or does not need a large screen to determine contents.

According to various embodiments of the present disclosure, the second group may include a camera app 1350, a video reproduction app 1360, and the like. The second area 260 may be used when a user intents to determine an image or video simply through a small screen.

According to various embodiments of the present disclosure, the second group may include the following apps for providing simple information, such as a news notification app 1370, a stock notification app 1380, an exchange rate app 1390, and the like. According to various embodiments of the present disclosure, an extension app may be executed through the first area 250 when the user selects the apps.

Each of the above-mentioned elements of the electronic device according to various embodiments of the present disclosure may be configured with one or more components, and the names of the elements may be changed according to the type of the electronic device. The electronic device according to various embodiments of the present disclosure may include at least one of the above-mentioned elements, and some elements may be omitted or other additional elements may be added. Furthermore, some of the elements of the electronic device according to various embodiments of the present disclosure may be combined with each other so as to form one entity, so that the functions of the elements may be performed in the same manner as before the combination.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific integrated circuit (ASIC) chip, a field-programmable gate array (FPGA), and a programmable-logic device for performing some operations, which are known or will be developed.

At least a portion of an apparatus (e.g., modules or functions thereof) or a method (e.g., operations) according to various embodiments of the present disclosure may be, for example, implemented by instructions stored in a computer-readable storage media in the form of a program module. The instruction, when executed by one or more processors (e.g., a processor 120), may cause the one or more processors to perform a function corresponding to the instruction. The computer-readable storage media, for example, may be the memory 130.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

A module or a program module according to various embodiments of the present disclosure may include at least one of the above elements, or a portion of the above elements may be omitted, or additional other elements may be further included. Operations performed by a module, a program module, or other elements according to various embodiments of the present disclosure may be executed sequentially, in parallel, repeatedly, or in a heuristic method. In addition, a portion of operations may be executed in different sequences, omitted, or other operations may be added.

As described above, a display of an electronic device may be partitioned into a plurality of areas in appearance, and the areas may be driven independently of each other.

According to various embodiments of the present disclosure, different applications may be driven at the areas independently of each other, thereby making it possible to provide a multi-window and multi-tasking function of an intuitive simple form.

According to various embodiments of the present disclosure, each of the areas independent of each other may enter a sleep state or a locking state, thereby improving power efficiency.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device which drives applications, the electronic device comprising:
a display partitioned into a first area and a second area;
a memory configured to store the applications classified into a first group and a second group; and
a processor configured to:
output a screen, associated with an execution of the first group, through the first area, and
output a screen, associated with an execution of the second group, through the second area.

2. The electronic device of claim 1,
wherein sizes of the first and second areas are fixed, and
wherein the second area is disposed at a top or bottom of the first area and is smaller in area than the first area.

3. The electronic device of claim 1, wherein the first and second areas receive specific inputs at a sleep state, respectively, and are activated independently of each other.

4. The electronic device of claim 1, wherein the first and second areas receive unlocking inputs at a locking state, respectively, and are unlocked independently of each other.

5. The electronic device of claim 1, wherein the first and second areas enter a sleep state from a screen-on state independently of each other.

6. The electronic device of claim 1, wherein the processor is further configured to call an application belonging to the first group based on an execution result of an application belonging to the second group.

7. The electronic device of claim 6, wherein the called application outputs additional information associated with the execution result through the first area.

8. The electronic device of claim 6, wherein the called application performs a specific function based on the execution result and outputs a result of performing the specific function through the first area.

9. A method for executing an application, performed on an electronic device including a display, the method comprising:
storing applications which are executable on the electronic device and are classified into a first group and a second group;
outputting, when an application included in the first group is executed, an execution result of the application included in the first group through a first area of the display; and
outputting, when an application included in the second group is executed, an execution result of the application included in the second group through a second area distinct from the first area.

10. The method of claim 9, further comprising:
allowing the first and second areas to enter a screensaver state from a screen-on state independently of each other.

11. The method of claim 9, further comprising:
allowing the first and second areas to enter a sleep state from a screen-on state independently of each other.

12. The method of claim 11, further comprising:
receiving specific inputs corresponding to the first and second areas at a sleep state and activating the first and second areas independently of each other.

13. The method of claim 11, further comprising:
receiving specific inputs corresponding to the first and second areas at a sleep state and allowing the first and second areas to enter a locking state independently of each other.

14. The method of claim 13, further comprising:
receiving specific inputs corresponding to the first and second areas at the locking state, and
allowing the first and second areas to enter an unlocking state independently of each other.

15. At least one non-transitory computer readable storage medium for storing a computer program of instructions configured to be readable by at least one processor for instructing the at least one processor to execute a computer process for performing the method of claim 9.
